(19) Europäisches Patentamt / European Patent Office / Office européen des brevets

(11) **EP 3 839 076 A1**

(12) **EUROPÄISCHE PATENTANMELDUNG**

(43) Veröffentlichungstag:
**23.06.2021 Patentblatt 2021/25**

(21) Anmeldenummer: **19218510.6**

(22) Anmeldetag: **20.12.2019**

(51) Int Cl.:
*C21B 7/14* (2006.01)          *C21C 5/46* (2006.01)
*F27D 21/04* (2006.01)          *F27D 21/00* (2006.01)
*F27D 3/15* (2006.01)          *F27D 21/02* (2006.01)
*F27D 19/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Primetals Technologies Austria GmbH**
**4031 Linz (AT)**

(72) Erfinder:
• **Rohrhofer, Andreas**
  **4070 Eferding (AT)**
• **Fischer, Paul**
  **4040 Linz (AT)**
• **Voglmayr, Bernhard**
  **4060 Leonding (AT)**
• **Hartl, Franz**
  **4720 Kallham (AT)**
• **Mayrhofer, Anna**
  **4722 Peuerbach (AT)**
• **Stadlmayr, Richard**
  **4063 Hoersching (AT)**

(74) Vertreter: **Metals@Linz**
**Primetals Technologies Austria GmbH**
**Intellectual Property Upstream IP UP**
**Turmstraße 44**
**4031 Linz (AT)**

(54) **VERFAHREN UND ANLAGE ZUR ÜBERWACHUNG EINES ABGIESSVORGANGES VON FLÜSSIGEM METALL UND/ODER SCHLACKE AUS EINEM METALLURGISCHEN GEFÄSS**

(57)     Die Erfindung betrifft das Gebiet der metallurgischen Anlagen, konkret metallurgische Gefäße für flüssiges Metall und flüssige Schlacke.

Die Aufgabe der Erfindung ist es, ein sicheres Abgießen von flüssigem Metall (14) aus einem metallurgischen Gefäß in ein anderes metallurgisches Gefäß zu gewährleisten, ohne Menschen oder Anlagenteile im Bereich eines Abgießvorganges zu gefährden.

Die Aufgabe wird dadurch gelöst, dass für das zweite metallurgische Gefäß (11) aufgrund von Informationen aus einem Speicher (2) eine Abgießposition bestimmt wird. Das zweite metallurgische Gefäß (11) wird an dieser Abgießposition platziert und diese Abgießposition wird im Speicher (2) als angefahren markiert. Wenn das metallurgische Gefäß eine zweite Öffnung (13) aufweist, kann diese mit einem optischen Sensorsystem (3a) überwacht werden. Mithilfe der Auswerteeinheit (1) wird bei Erkennung von flüssiger Schlacke (15) und / oder Stahl (14) in einem vordefinierten Bereich dieser zweiten Öffnung (13) ein Alarm ausgegeben und/oder einem Steuer- und Regelsystem (4) wird ein Signal übermittelt.

Fig. 1

**Beschreibung**

Gebiet der Technik

Die vorliegende Erfindung betrifft das Gebiet der metallurgischen Anlagen, konkret metallurgische Gefäße für flüssiges Metall und flüssige Schlacke. Einerseits betrifft die Erfindung ein Verfahren zur Überwachung eines Abgießvorganges von flüssigem Metall und/oder Schlacke aus einer ersten Öffnung eines ersten metallurgischen Gefäßes in ein zweites metallurgisches Gefäß.

Andrerseits betrifft die Erfindung eine Metallurgische Anlage zum Abgießen von flüssigem Metall von einem ersten metallurgischen Gefäß in ein zweites metallurgisches Gefäß umfassend ein optisches Sensorsystem.

Stand der Technik

Bei der Erzeugung von flüssigem Metall, beispielsweise in einem Stahlwerk, werden üblicherweise metallurgische Gefäße verwendet, welche den Transport des flüssigen Metalls zwischen den einzelnen Anlagenteilen sicherstellen. Zu diesem Zweck sind im Stahlwerk eine Vielzahl von metallurgischen Gefäßen für den Transport im Einsatz. Diese metallurgischen Gefäße werden mithilfe eines Kranes und/oder Schienenfahrzeugen von einem Ort an einen Zielort bewegt. Schienenfahrzeuge sind erforderlich um die metallurgischen Gefäße in die Bereiche unter den Aggregaten - wie Konverter, Pfannenofen, Ruhrstahl-Heraeus Anlage und andere - zu befördern, welche mit einem Hallenkran nicht erreicht werden können. Diese Gefäße unterliegen einem ständigen Verschleiß, besonders im Bereich wo die Stahlschmelze von einem metallurgischen Gefäß in ein anderes ausgegossen wird. Das Problem hierbei ist, dass ein Ausgussstrahl in einer gebündelten Form aus der Ausgussöffnung eines ersten metallurgischen Gefäßes auf den Boden eines zweiten metallurgischen Gefäßes auftrifft. Dieses Auftreffen stellt eine hohe Belastung dar und konzentriert sich auf eine kleine Fläche. Der Ausgussstrahl hat eine sehr hohe abrasive Wirkung auf eine Ausmauerung der metallurgischen Gefäße und die hohe Temperatur des flüssigen Metalls erhöht diese Wirkung noch zusätzlich. Wenn der Ausgussstrahl - bei jedem Ausgussvorgang - bei der jeweiligen Pfanne im selben Bereich am Boden auftrifft, kann es zu lokalen Überhitzungen der Pfanne kommen. Im schlimmsten Fall führt dies zu einem Durchbruch der Pfanne und somit zu Anlagenschäden. Dies kann auch die im Bereich der Anlagen befindlichen Personen gefährden. Wenn das erste metallurgische Gefäß zwei Öffnungen aufweist, wie beispielsweise ein Blast Oxygen Furnace (BOF) Konverter, kann ein weiteres Problem auftreten. Diese metallurgischen Gefäße unterliegen einer starken Verschmutzung. Eine Verschmutzung zeigt sich zumeist im Bereich einer Öffnung des metallurgischen Gefäßes durch anhaftende Schlacke mit metallischen Einschlüssen. Besonders kritisch sind Anbackungen im Bereich eines Abstichloches, da diese zu einem reduzierten Ausfluss des flüssigen Metalls beim Abstich führen können. Wenn das Abstichloch einen reduzierten Ausfluss aufweist, ist der Strahl noch konzentrierter beim Auftreffen auf den Boden der jeweiligen Pfanne. Des Weiteren besteht durch den geringeren Abfluss über das Abstichloch die Gefahr, dass über eine zweite Öffnung ein ungewollter Abfluss passiert - beispielsweise über einen Konvertermund eines BOF Konverters. Ein Abfluss über den Konvertermund kann auch stattfinden, wenn der Konverter schnell gekippt wird, um einen Schlackeabfluss über das Abstichloch in das zweite metallurgische Gefäß - beispielsweise eine Pfanne - zu verhindern. Das Problem eines Abflusses über die zweite Öffnung - den Konvertermund - besteht, da zwar die Masse der Schlacke über Modelle berechnet werden kann, das Volumen aber durch Lufteinschlüsse stark variiert. Weiters ändert sich auch die Geometrie eines metallurgischen Gefäßes im Laufe der Zeit, hervorgerufen durch Anbackungen und Ausmauerungsverschleiß. Dies führt dazu, dass ein gewohnter Verlauf des Abgießens von flüssigem Metall - definiert via Kippwinkel und Kippgeschwindigkeit - sich verändert. Ein solcher ungewollter Abfluss ist stets zu vermeiden, da dies zu einer Beschädigung von Anlagenkomponenten führt, sowie zu Gefahren für die im Bereich der Anlagen befindlichen Personen. Es ist beim Ausgießen von flüssigem Metall, deshalb anhand einer Sichtkontrolle der Ausmauerungszustand der Pfannen zu überprüfen und andererseits ist beim Ausgießen aus einem metallurgischen Gefäß stets sicherzustellen, dass kein Abfluss über die zweite Öffnung stattfindet. Hierzu werden häufig zusätzliche Personen eingesetzt, welche dem Bedienpersonal entsprechende Informationen übermitteln.

Zusammenfassung der Erfindung

Die Aufgabe der Erfindung ist es, ein sicheres Abgießen von flüssigem Metall aus einem metallurgischen Gefäß in ein anderes metallurgisches Gefäß zu gewährleisten, ohne Menschen oder Anlagenteile im Bereich eines Abgießvorganges zu gefährden.

Die Aufgabe wird dadurch gelöst, dass das zweite metallurgische Gefäß bei einer Anfahrt zum ersten metallurgischen Gefäß von einer Auswerteeinheit identifiziert wird. Die Auswerteeinheit ruft aus einem Speicher Informationen zu einer möglichen Abgießposition ab. In weiterer Folge bestimmt die Auswerteeinheit anhand dieser Informationen die Abgießposition. Das zweite metallurgische Gefäß wird an dieser Abgießposition platziert und diese Abgießposition wird im Speicher als angefahren markiert. Wenn das metallurgische Gefäß eine zweite Öffnung aufweist, kann diese mit einem optischen Sensorsystem überwacht werden. Mithilfe der Auswerteeinheit wird bei Erkennung von flüssiger Schlacke und / oder Stahl in einem vordefinierten Bereich dieser zweiten Öffnung ein Alarm ausgegeben und/oder einem Steuer- und Regelsystem wird ein Signal übermittelt.

Das Identifizieren des zweiten metallurgischen Gefäßes kann beispielsweise über RFID Transponder oder über Kamerasysteme, welche eine Nummer am Gefäß erkennen können und eine eindeutige Identifizierung ermöglichen, erfolgen.

Als Information wird alles verstanden was für eine Positionierung eines metallurgischen Gefäßes von Bedeutung ist. Es sind dies insbesondere genaue absolute Positionswerte oder relative Werte zu einem Referenzpunkt. Des Weiteren können auch folgende Informationen von Relevanz sein:

- ein Ausmauerungszustand des zweiten metallurgischen Gefäßes,
- Auftreffpunkte innerhalb des zweiten metallurgischen Gefäßes - welche durch eine Abgießstrahl möglichst vermieden werden sollten,
- Zustand eines Abstichloches.

Das zweite metallurgische Gefäß soll also derart an der Abgießposition platziert werden, dass eine Bodenausmauerung möglichst gleichmäßigen Belastungen - von der neuen Ausmauerung bis zu jenem Zeitpunkt, an dem die Ausmauerung wieder erneuert wird - unterworfen wird. Dies bedeutet, dass durch dieses Verfahren sichergestellt werden soll, dass bei jedem Ausgießvorgang möglichst ein anderer Bereich der Ausmauerung als Auftreffpunkt erreicht werden soll, damit die Ausmauerung aufgrund des Abgießvorganges - möglichst gleichmäßig verschleißt. Im Fall, dass alle möglichen Auftreffpunkte bereits einmal angefahren wurden, können entweder alle Markierungen gelöscht werden oder es wird ein Zähler für die Ausgießpositionen entsprechend erhöht. Die Abgießposition wird im Speicher als angefahren markiert bedeutet in diesem Zusammenhang, dass ein Zähler im Speicher - mit jedem Anfahren der jeweilen Abgießposition - erhöht wird. Es kann aber auch bedeuten, dass wenn alle verfügbaren Abgießpostionen einmal angefahren wurden alle Markierungen wieder gelöscht werden und von neuem die Markierung im Speicher erfolgt. Es ist möglich, dass beispielsweise in einem zweiten oder dritten Durchlauf gewisse Abgießpositionen nicht mehr zur Verfügung stehen.

Wenn das erste metallurgische Gefäß eine zweite Öffnung aufweist ist bei jedem Abgießvorgang die Möglichkeit gegeben, dass über diese Öffnung flüssige Schlacke und / oder flüssiges Metall austritt. Damit dies verhindert werden kann wird diese Öffnung durch ein optisches Sensorsystem ständig überwacht. Im Bereich dieser zweiten Öffnung wird innerhalb dieses metallurgischen Gefäßes ein Bereich definiert, in welchem bei Auftreten von flüssiger Schlacke und / oder flüssigem Metall ein Signal ausgegeben wird, welches eine Warnung und/oder ein Alarm auslöst. Dieses Signal kann auch direkt an das Steuer- und Regelsystem übermittelt werden. Der vordefinierte Bereich ist beispielsweise durch einen bestimmten Abstand, eine Form und Abmessungen bezogen auf den Rand der zweiten Öffnung definiert. Der vordefinierte Bereich kann auch in mehrere Bereiche unterteilt sein. Ein Bereich der näher am Rand liegt und einen Alarmbereich definiert, in welchem sofortige Maßnahmen notwendig sind. Es kann auch ein Bereich definiert sein, in welchem nur eine Warnung ausgegeben wird, dass ein kritischer Bereich bald erreicht wird. Diese vordefinierten Bereiche werden meistens bei einer Inbetriebnahme eines solchen Verfahrens definiert und eingestellt.

Eine vorteilhafte Ausführungsform sieht vor, dass durch das optische Sensorsystem Bilder aufgenommen werden und die Auswerteeinrichtung das Auftreten von flüssiger Schlacke und / oder Metall im vordefinierten Bereich dieser Bilder anhand eines optischen Bildflusses bestimmt. Der optische Bildfluss einer Bildsequenz ist ein Vektorfeld einer in eine Bildebene projizierten Geschwindigkeit. Diese Geschwindigkeitvektoren werden für verschiedene Bildpunkte im vordefinierten Bereich berechnet und angezeigt. Es kann also anhand der Bewegung von charakteristischen Mustern in Bildsequenzen die Bewegung von beispielsweise flüssiger Schlacke festgestellt werden. Wenn sich flüssige Schlacke und / oder flüssiges Metall - welche in einem Bild als sehr hell wahrgenommen wird - bewegt, kann dies in einer Bildsequenz festgestellt werden. Bei einer Bewegung der Schlacke behält das charakteristische Muster die geometrische Form während der Bewegung, wodurch in einer Bildsequenz die Bewegung dieses charakteristischen Musters erkannt wird. Es kann auch eine Geschwindigkeit bestimmt werden. Sobald eine Bewegung innerhalb eines vordefinierten Bereichs detektierbar ist, wird ein Alarm oder eine Warnung ausgegeben und / oder es wird ein Signal an das Steuer- und Regelsystem weitergeleitet.

Eine weitere bevorzugte Ausführungsform sieht vor, dass durch das optische Sensorsystem Bilder aufgenommen werden und die Auswerteinrichtung anhand einer Veränderung von Eigenschaften von Pixeln, im vordefinierten Bereich dieser Bilder, das Auftreten von flüssiger Schlacke bestimmt. Solche Eigenschaften sind beispielsweise eine Auswertung der Verteilung des Grauwertes von Schwarz - Weiß Bildern, also die Verteilung der Häufigkeit von Pixeln, welche von Schwarz bis Weiß aufgetragen werden. Eine weitere Möglichkeit ist die Auswertung von Farbverteilung eines Farbbildes. Eine Auswertung hinsichtlich Farbmuster, also die Auswertung hinsichtlich Farbe und / oder Grauwert von einzelnen oder mehrerer benachbarter Pixel ermöglicht es scharfe Kanten im Bereich der zweiten Öffnung zu erkennen. Diese scharfen Kanten werden durch eine direkte Nachbarschaft von sehr hellen und sehr dunklen Pixeln erkannt.

Eine zweckmäßige Ausführungsform sieht vor, dass ein Abgießstrahl, welcher aus dem ersten metallurgischen Gefäß austritt, von der Auswerteeinheit bestimmt wird und bei Abweichung von einer Sollposition eine Korrektur der Abgießposition erfolgt. Durch Anbackungen und / oder Verschleiß der ersten Öffnung kann sich der Abgießsstrahl verändern. Dies führt dazu, dass sich die Abgießposition - also jene Position wo der Abgießstrahl auf den Boden des zweiten metallurgischen Gefäßes auftritt - sich verändert. Wenn eine solche Änderung des Abgießstrahles von der Auswerteeinheit erkannt wird, erfolgt eine Korrektur der Abgießposition. Durch diese Methode kann der gleichmäßige Verschleiß der Bodenausmauerung zusätzlich verbessert werden und die Abgießpositionen durch ein kleineres Raster festgelegt werden, da der Auftreffpunkt des Abgießstrahls im metallurgischen Gefäß noch zielgenauer bestimmt wird.

Eine vorteilhafte Ausführungsform sieht vor, dass die Informationen zur Abgießposition eine konkrete Abgießposition, ein Bereich von möglichen Abgießpositionen, eine kritische zu vermeidende Abgießposition, ein Gewichtungsfaktor für die Abgießposition und/oder Zustandsinformationen einer Ausmauerung des zweiten metallurgischen Gefäßes ist. Eine konkrete Abgießposition ist durch einen fixen Bezugspunkt gegeben. Es kann aber auch ein Bereich von möglichen Abgießpositionen vorgegeben werden. Dies ermöglicht der Auswerteeinheit eine gewisse Freiheit bei der Positionierung. Eine hilfreiche Information zur Bestimmung der Abgießposition ist jene über Bereiche welche als Abgießposition vermieden werden sollten, weil diese Bereiche des metallurgischen Gefäßes beispielsweise eine Bodendüse oder einen vorhandenen hohen Verschleiß aufweisen. Ein Gewichtungsfaktor der Abgießposition gibt beispielsweise Auskunft, ob der Boden in diesem Bereich Verschleißerscheinungen oder Bodendüsen - wodurch dieser Bereich möglichst vermieden werden sollte - aufweist. Die Information über den Ausmauerungszustand kann Angaben beinhalten, beispielsweise wie oft die Pfanne verwendet wurde oder Messungergebnisse der Ausmauerung. Durch die Information des Ausmauerungszustandes kann beispielsweise immer jene Abgießposition angefahren werden, welche den geringsten Verschleiß aufweist.

Eine weitere bevorzugte Ausführungsform sieht vor, dass der vordefinierte Bereich anhand eines Kippwinkels angepasst wird. Der vordefinierte Bereich, in welchem ein Auftreten von Schlacke kritisch ist verändert sich während des Abgießvorganges. Dies ist unter anderem abhängig vom Kippwinkel des ersten metallurgischen Gefäßes. Es erfolgt eine Anpassung des vordefinierten Bereiches hinsichtlich der Größe, Form und/oder Position anhand von verschiedenen Prozeßparametern.

Eine ganz besonders vorteilhafte Ausführungsform sieht vor, dass die Veränderung von Pixeln anhand eines Schwarz-Weiß-Bildes ausgewertet wird, indem ein Grauwerthistogramm erstellt wird. Das Grauwerthistogramm wird in mehrere Bereiche, bevorzugt in vier Bereiche, unterteilt und der Bereich mit dem höchsten Grauwert wird mit einem oder mehreren Grenzwerten verglichen. Durch ein Grauwerthistogramm wird eine Häufigkeitsverteilung aller Grauwerte erstellt. Es wird die Häufigkeit der Pixel von Schwarz bis Weiß aufgetragen, wobei Schwarz ein niedriger Wert zugewiesen wird und Weiß ein hoher. Im nächsten Schritt wird dieses Histogramm in verschiedene Bereiche unterteilt. Es ist auch denkbar, dass diese Bereiche mit benachbarten Bereichen überlappen. Für die Auswertung wird dann jener Bereich herangezogen welcher die höchsten Grauwerte - also helle Pixel - aufweist. Wenn keine Schlacke in diesem Bereich vorhanden ist liegt eine sehr niedrige Pixelanzahl vor. Durch heranziehen des hohen Grauwertes als Auswertekriterium ohne Berücksichtigung der dunklen Bereiche, kann das Ergebnis durch abgedunkelte Bereiche nicht verfälscht werden. Solche abgedunkelten Bereiche entstehen, wenn zwischen Kamera und metallurgischem Gefäß sich bewegte Objekte -bspw. Anlagenteile - oder Personen befinden. Wenn die Pixelanzahl im Bereich mit einem hohen Grauwert einen bestimmten Grenzwert überschreitet ist dies ein Hinweis, dass eine erhöhte Menge von Schlacke und / oder Metall im vordefinierten Bereich vorhanden ist und ein Abfluss über die zweite Öffnung droht. Die Grenzwerte sind jeweils abhängig von den Lichtverhältnissen bei der Anlage, dem verwendeten Kamerasystem und / oder anderen Umgebungsbedingungen.

Eine weitere bevorzugte Ausführungsform sieht vor, dass die Grenzwerte von der Pixelanzahl des Schwarz-Weiß-Bildes und/oder dem an den Bereich des höchsten Grauwertes angrenzenden Bereich basieren. Das Auswertekriterium wird ergänzt, indem das Grauwerthistogramm in mehrere Bereiche aufgeteilt wird, beispielsweise vier. Die beiden Bereiche - jener in welchem die Pixelanzahl mit den höchsten Grauwerten aufgetragen ist und jener mit der Pixelanzahl mit den zweithöchsten Grauwerten - werden für die Auswertung herangezogen. Zusätzlich kann auch noch die Pixelanzahl des Schwarz-Weiß-Bildes als Auswertekriterium herangezogen werden. Diese Informationen werden dann mit Grenzwerten verglichen. Es wird also beispielsweise die Summe der in den jeweiligen Bereichen auftretenden Pixeln gebildet und das Verhältnis der beiden Bereich mit einem Grenzwert verglichen und/oder die Pixelanzahl im Bereich mit dem höchsten Grauwert ins Verhältnis mit der Gesamtanzahl der Pixel des Schwarz-Weiß Bildes gesetzt und ebenfalls mit einem Grenzwert verglichen. Die Grenzwerte sind jeweils von den Lichtverhältnissen bei der Anlage, dem verwendeten Kamerasystem und / oder anderen Umgebungsbedingungen.

Die Aufgabe wird auch gelöst durch eine metallurgische Anlage, welche ein Computersystem aufweist, welches das Verfahren nach den Ansprüchen 1-9 ausführt.

Kurze Beschreibung der Zeichnungen

Fig. 1 zeigt schematisch die metallurgische Anlage zum Ausgießen von flüssigem Metall.

Fig. 2 zeigt eine weitere Variante der metallurgischen Anlage zum Ausgießen von flüssigem Metall.

Fig. 3 zeigt eine Draufsicht auf ein zweiten metallurgischen Gefäß.

Fig. 4 zweigt eine Auswertemethode für die Überwachung der zweiten Öffnung

Beschreibung der Ausführungsformen

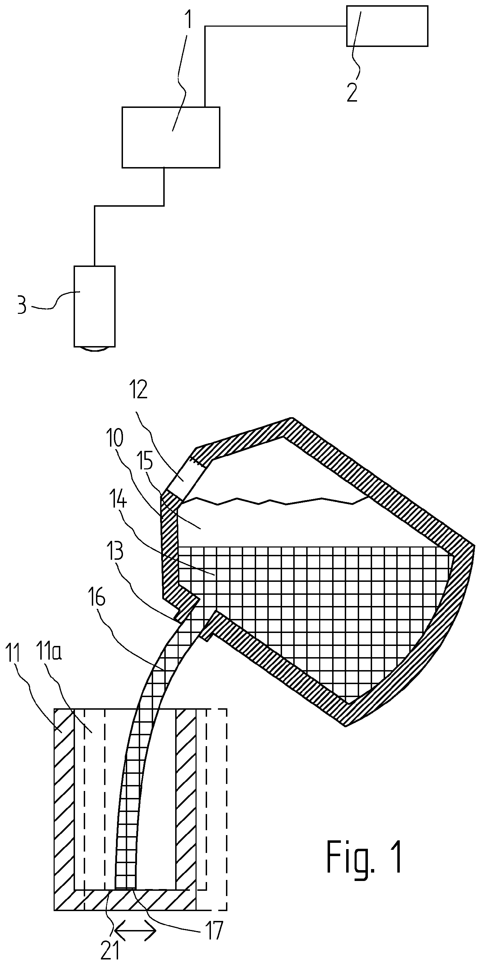

In Fig. 1 ist ein erstes metallurgische Gefäß 10 gezeigt. In diesem metallurgischen Gefäß 10 ist flüssiges Metall 14 und flüssige Schlacke 15 enthalten. Durch eine erste Öffnung 13 wird das flüssige Metall 14 ausgegossen. Der Abgießstrahl 16 tritt aus der ersten Öffnung 13 aus und wird in ein zweites metallurgisches Gefäß 11 - welches mit einer Ausmauerung versehen ist - eingegossen. Der Abgießstrahl 16 trifft am Boden 21 in einem Bereich 17 auf. Dieses Auftreffen des Abgießstrahles 16 verursacht einen hohen Verschleiß an der Ausmauerung. Durch eine Auswerteeinheit 1, welche mit einem Sensorsystem 3 verbunden ist, erfolgt ein erkennen des jeweiligen zweiten metallurgischen Gefäßes 11. Ist die Erkennung erfolgt werden aus einem Speicher 2 Informationen bezüglich einer möglichen Abgießposition abgerufen. Die Abgießposition wird dann anhand dieser Information derart festgelegt, dass möglichst ein gleichmäßiger Verschleiß des Bodens 21 erfolgt. Die Abgießposition wird bei jedem Abgießvorgang wieder neu festgelegt. Es kann also beispielsweise bei einem ersten Abgießvorgang die Postion des metallurgischen Gefäßes 11 gewählt werden und beim nächsten Abgießvorgang die Abgießposition 11a. Durch eine gezielte Auswahl ist sichergestellt, dass nicht bei jedem Abgießvorgang immer die gleiche Position durch den Abgießstrahl 16 stark belastet wird. Die Positionierung des zweiten metallurgischen Gefäßes 11 kann mittels eines Lasersensorsystems erfolgen, von Drehgebern welcher an Antriebsmotoren von sogenannten Pfannenwagen angeordnet sind oder auch über ein Kamerasystem.

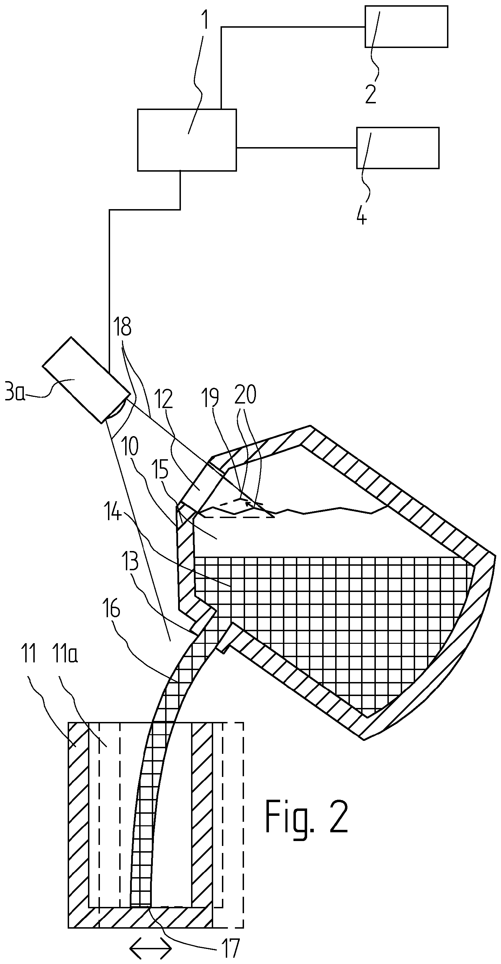

In der Fig. 2 ist zusätzlich zu Fig. 1 noch eine Überwachung der zweiten Öffnung 12 dargestellt. Beim Ausgießen des flüssigen Metalls 14 schwimmt die Schlacke 15 auf dem flüssigen Metall 14. Durch eine Veränderung eines Kippwinkels des ersten metallurgischen Gefäßes 10 besteht die Gefahr, dass flüssige Schlacke 15 durch die zweite Öffnung 12 austritt. Durch das optische Sensorsystem 3a wird die zweite Öffnung 12 überwacht. Im Erfassungsbereich 18 wird ein vordefinierter Bereich 19 definiert, welcher für eine Auswertung herangezogen wird. Die Auswertung kann beispielsweise durch einen optischen Fluss 20 erfolgen, in welchem ein charakteristisches Muster des Bildes verfolgt wird und anhand der Bewegung dieses charakteristischen Musters kann erkannt werden, ob sich Schlacke in den Bereich der zweiten Öffnung bewegt. Mit dem Bezugszeichen 20 ist eine Erhöhung markiert, welche sich beispielsweise in Richtung der zweiter Öffnung 12 bewegt - dargestellt durch die strichlierte Linie. In diesem Fall kann ein Signal von der Auswerteeinheit 1 an die Steuer- und Regeleinheit 4 übermittelt werden und / oder ein Alarm ausgegeben werden.

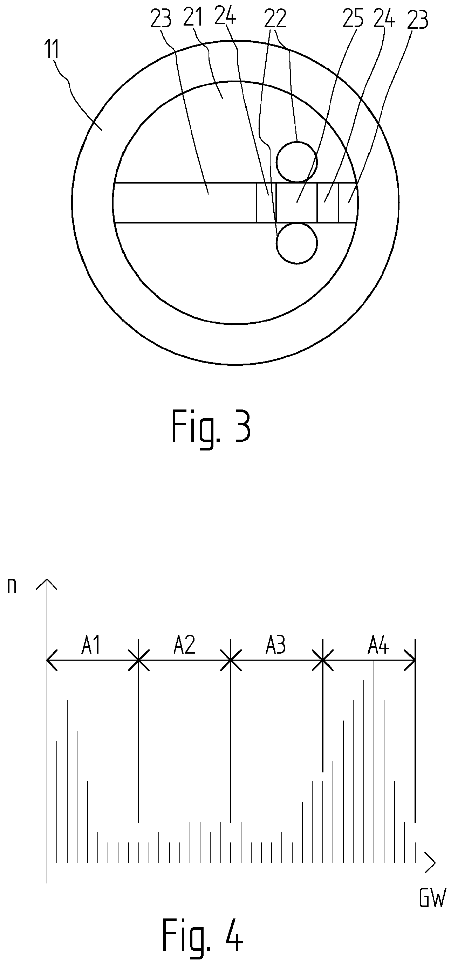

Die Fig. 3 zeigt eine Draufsicht auf ein zweites metallurgisches Gefäß 11 - eine sogenannte Pfanne. Das zweite metallurgische Gefäß 2 wird häufig mittels eines schienengebundenen Fahrzeugs zur Abgießposition gebracht. Dies bedeutet, dass die Abgießposition nur in Längsrichtung - also in einer Fahrtrichtung des Fahrzeugs - verändert werden kann und nicht in Querrichtung. Es ist aber auch ein Freiheitsgrad in Querrichtung denkbar, damit die Abgießposition in zwei Richtungen verschoben werden kann. Das metallurgische Gefäß 11 weist einen Boden 21 auf, welcher zwei Bodendüsen 22 aufweist. Die Abgießposition wird in dieser Darstellung nur in der Fahrtrichtung verändert. Der Bereich zwischen den Bodendüsen 22 stellt einen kritischen Bereich 25 dar, welcher für die Auftreffpunkt des Abgießstrahls eher gemieden oder zumindest nur selten als Auftreffbereich verwendet werden soll. Ein teilkritischer Bereich 24 ist angrenzend an den kritischen Bereich 25 und einen unkritischen Bereich 23. Der unkritische Bereich 23 ist jener Bereich, der bevorzugt als Auftreffbereich verwendet werden sollte. Der teilkritische Bereich 24 kann auch als Auftreffbereich verwendet werden, dieser sollte aber in der Häufigkeit seltener gewählt werden.

In Fig. 4 ist eine weitere Auswertemethode für die Überwachung der zweiten Öffnung 12 dargestellt. In diesem Fall wird die Auswertung aufgrund des Grauwertes GW erstellt. Es wird ein Histogramm erstellt in welchem die Häufigkeit n von Pixeln zu jedem Grauwert GW aufgetragen wird. Es wird also die Häufigkeit der Pixel über eine Skala von Schwarz bis Weiß aufgetragen. Das Histogramm wird dann in unterschiedliche Bereiche - in diesem Fall in vier gleichgroße Bereiche A1-A4 - aufgeteilt. Es ist auch denkbar, dass sich die Bereiche A1-A4 überlappen. Die flüssige Schlacke ist ausschließlich durch helle Pixel charakterisiert. Aus diesem Grund werden für die Auswertung die Bereiche A1 und A2 nicht herangezogen. Die Bereich A1 und A2 beinhalten meistens auch abgedunkelte Bereiche durch Personen oder bewegte Objekte, welche sich kurzeitig im Erfassungsbereich befinden können. Da diese Bereiche A1 und A2 für die Auswertung nicht verwendet werden, können Fehler durch abgedunkelte Bereiche verringert werden. Im nächsten Schritt werden die Häufigkeiten in den Bereichen A3 und A4 aufsummiert.

$$S3 = \sum A3$$

Formel 1

$$S4 = \sum A4$$

Formel 2

Die Summe S4 der Häufigkeit des Bereichs A4 wird dann mit einem Grenzwert vergleichen, welcher mit der Summe S3 multipliziert wird. Ein weiteres Kriterium kann ein Grenzwert Lim2 sein, welcher mit der Gesamtpixelanzahl multipliziert wird und mit der Summe S4 verglichen wird - siehe Formel 4.

$$S4 > Lim1 * S3 \quad \text{Formel 3}$$

$$S4 > Lim2 * Gesamtpixelanzal$$

Formel 4

Die Grenzwerte Liml und Lim 2 werden entsprechend der Lichtverhältnisse beim zu überwachenden metallurgischen Gefäß gewählt. Wenn beispielsweise die Formeln 3 und Formel 4 erfüllt sind, wird eine Warnung oder ein Alarm ausgegeben. Es ist auch denkbar, dass mehrere optische Sensorsystem im Einsatz sind, welche - von unterschiedlichen Richtungen oder Positionen aus - Bilder erfassen. Die jeweiligen Bilder werden dann in ihrem vordefinierten Bereich betrachtet und jeweils das Grauwert Histogramm erstellt. Die jeweiligen Histogramme werden dann entsprechend gewichtet. Diese Gewichtung fließt dann in die Gesamtsummenbildung gemäß den Formeln 1 und Formel 2 ein. So können mehrere Bilder gemeinsam für eine Auswertung herangezogen werden.

In einer vorteilhaften Ausführung ist es auch denkbar, dass die Auswertemethoden mit dem optischen Fluss mit jener des Grauwertes kombiniert werden. Dies ist beispielsweise sinnvoll, wenn sich Schlacke in einem vordefinierten Bereich über einen längeren Zeitraum befindet, diese aber nicht ausfließt. Eine Überprüfung des optischen Flusses gibt Ausfluss darüber, ob eine Gefahr des Ausflusses von Schlacke besteht.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Auswerteeinheit |
| 2 | Speicher |
| 3 | Sensoreinheit |
| 3a | Optische Sensorsystem |
| 4 | Steuer- und Regelsystem |
| 10 | Erstes metallurgisches Gefäß |
| 11, 11a | Zweites metallurgisches Gefäß |
| 12 | Erste Öffnung |
| 13 | Zweite Öffnung |
| 14 | Flüssiges Metall |
| 15 | Flüssige Schlacke |
| 16 | Abgießstrahl |
| 17 | Auftreffbereich |
| 18 | Erfassungsbereich |
| 19 | Vordefinierter Bereich |
| 20 | Optischer Fluss |
| 21 | Boden |
| 22 | Bodenspüler |
| 23 | Unkritischer Abgießbereich |
| 24 | teilkritischer Abgießbereich |
| 25 | Kritischer Abgießbereich |
| GW | Grauwert |
| n | Häufigkeit |
| A1-A4 | Bereiche |

**Patentansprüche**

1. Verfahren zur Überwachung eines Abgießvorganges von flüssigem Metall und/oder Schlacke aus einer ersten Öffnung eins ersten metallurgischen Gefäßes (10) in ein zweites metallurgisches Gefäß (11), **dadurch gekennzeichnet, dass**

   - das zweite metallurgische Gefäß (11) bei einer Anfahrt zum ersten metallurgischen Gefäß (10) von einer Auswerteeinheit (1) identifiziert wird,
   - die Auswerteeinheit (1) aus einem Speicher (2) Informationen zu einer möglichen Abgießposition abruft,
   - die Auswerteeinheit (1) anhand dieser Informationen die Abgießposition bestimmt,
   - das zweite metallurgische Gefäß (11) wird an dieser Abgießposition platziert und
   - diese Abgießposition wird im Speicher (2) als angefahren markiert
   - und / oder eine zweite Öffnung (13) des ersten metallurgischen Gefäßes (10) wird mit einem optischen Sensorsystem (3a) überwacht,
   - mithilfe der Auswerteeinheit (1) wird bei Erkennung von flüssiger Schlacke (15) und/oder flüssigem Stahl (14) in einem vordefinierten Bereich (19) innerhalb dieser zweiten Öffnung (13) ein Alarm ausgegeben und/oder einem Steuer- und Regelsystem (4) wird ein Signal übermittelt.

2. Verfahren zur Überwachung eines Abgießvorganges nach Anspruch 1, **dadurch gekennzeichnet, dass** durch das optische Sensorsystem (3a) Bilder aufgenommen werden und die Auswerteeinrichtung (1) das Auftreten von flüssiger Schlacke (15) und / oder flüssigem Stahl (14) im vordefinierten Bereich (19) dieser Bilder anhand eines optischen Bildflusses (20) bestimmt.

3.  Verfahren zur Überwachung eines Abgießvorganges nach Anspruch 1 oder 2, **dadurch gekennzeichnet, dass** durch das optische Sensorsystem (3a) Bilder aufgenommen werden und die Auswerteinrichtung (1) anhand einer Veränderung von Eigenschaften von Pixeln, im vordefinierten Bereich (19) dieser Bilder, das Auftreten von flüssiger Schlacke (15) und / oder flüssigem Stahl (14) bestimmt.

4.  Verfahren zur Überwachung eines sich mehrmals wiederholenden Abgießvorganges nach Anspruch 1 - 3, **dadurch gekennzeichnet, dass** ein Abgießstrahl (16), welcher aus dem ersten metallurgischen Gefäß (10) austritt, von der Auswerteeinheit (1) bestimmt wird und bei Abweichung von einer Sollposition eine Korrektur der Abgießposition des zweiten metallurgischen Gefäßes (11) erfolgt.

5.  Verfahren zur Überwachung eines Abgießvorganges nach Anspruch 1 - 4, **dadurch gekennzeichnet, dass** die Informationen zur Abgießposition eine konkrete Abgießposition, ein Bereich von möglichen Abgießpositionen, eine kritische zu vermeidende Abgießposition, ein Gewichtungsfaktor für die Abgießposition und/oder Zustandsinformationen einer Ausmauerung des zweiten metallurgischen Gefäßes (11) ist.

6.  Verfahren zur Überwachung eines Abgießvorganges nach Anspruch 1 - 5, **dadurch gekennzeichnet, dass** der vordefinierte Bereich (19) anhand eines eines Kippwinkel angepasst wird.

7.  Verfahren zur Überwachung eines Abgießvorganges nach Anspruch 1 - 6, **dadurch gekennzeichnet, dass** die Veränderung von Pixeln anhand eines Schwarz-Weiß-Bildes ausgewertet wird indem ein Grauwerthistogramm erstellt wird, wobei das Grauwerthistogramm in mehrere Bereiche, bevorzugt in vier Bereiche, unterteilt wird und der Bereich mit dem höchsten Grauwert mit einem oder mehreren Grenzwerten verglichen wird.

8.  Verfahren zur Überwachung eines Abgießvorganges nach Anspruch 7, **dadurch gekennzeichnet, dass** die Grenzwerte von der Pixelanzahl des Schwarz-Weiß-Bildes und/oder dem an den Bereich mit dem höchsten Grauwert angrenzenden Bereich basieren.

9.  Metallurgische Anlage zum Abgießen von flüssigem Metall von einem ersten metallurgischen Gefäß (10) in ein zweites metallurgisches Gefäß (11) umfassend ein optisches Sensorsystem (3a), **dadurch gekennzeichnet, dass** ein Computersystem das Verfahren nach den Ansprüchen 1 - 8 ausführt.

Fig. 1

Fig. 2

23 21 24    22    25 24 23

11

## Fig. 3

n

A1    A2    A3    A4

GW

## Fig. 4

**Europäisches Patentamt**
**European Patent Office**
**Office européen des brevets**

# EUROPÄISCHER RECHERCHENBERICHT

Nummer der Anmeldung

EP 19 21 8510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/031469 A1 (SIEMENS VAI METALS TECH GMBH [AT]; FLEISCHANDERL JOHANN [AT]) 20. März 2008 (2008-03-20) * Seite 4 - Seite 6 * * Abbildung 1 * ----- | 1-9 | INV. C21B7/14 C21C5/46 F27D21/04 F27D21/00 F27D3/15 F27D21/02 F27D19/00 |
| X | US 6 197 086 B1 (STOFANAK JOHN A [US] ET AL) 6. März 2001 (2001-03-06) * Abbildung 1 * ----- | 1-9 | ADD. F27D3/15 |
| A | EP 2 425 914 A1 (SINTOKOGIO LTD [JP]; NAT UNIV CORP TOYOHASHI UNIV [JP]) 7. März 2012 (2012-03-07) * Abbildung 1 * ----- | 1-9 | |

RECHERCHIERTE SACHGEBIETE (IPC)

C21B
C21C
F27D

Der vorliegende Recherchenbericht wurde für alle Patentansprüche erstellt

| Recherchenort | Abschlußdatum der Recherche | Prüfer |
|---|---|---|
| Den Haag | 26. Juni 2020 | Gimeno-Fabra, Lluis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 21 8510

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2020

| Im Recherchenbericht angeführtes Patentdokument | Datum der Veröffentlichung | Mitglied(er) der Patentfamilie | Datum der Veröffentlichung |
|---|---|---|---|
| WO 2008031469 A1 | 20-03-2008 | AT 504079 A1 | 15-03-2008 |
| | | AT 527075 T | 15-10-2011 |
| | | BR PI0716772 A2 | 07-05-2013 |
| | | CA 2662412 A1 | 20-03-2008 |
| | | CN 101516548 A | 26-08-2009 |
| | | EP 2061612 A1 | 27-05-2009 |
| | | ES 2372316 T3 | 18-01-2012 |
| | | KR 20090064452 A | 18-06-2009 |
| | | PL 2061612 T3 | 29-02-2012 |
| | | RU 2009113596 A | 20-10-2010 |
| | | TW 200815122 A | 01-04-2008 |
| | | UA 96303 C2 | 25-10-2011 |
| | | US 2009230159 A1 | 17-09-2009 |
| | | WO 2008031469 A1 | 20-03-2008 |
| US 6197086 B1 | 06-03-2001 | AR 024527 A1 | 16-10-2002 |
| | | AT 257051 T | 15-01-2004 |
| | | AU 737142 B2 | 09-08-2001 |
| | | BR 0000533 A | 12-06-2001 |
| | | CA 2295386 A1 | 08-04-2001 |
| | | CN 1306095 A | 01-08-2001 |
| | | DE 60007492 T2 | 23-12-2004 |
| | | EP 1090702 A2 | 11-04-2001 |
| | | JP 3160273 B2 | 25-04-2001 |
| | | JP 2001107127 A | 17-04-2001 |
| | | KR 20010039517 A | 15-05-2001 |
| | | TW 505701 B | 11-10-2002 |
| | | US 6197086 B1 | 06-03-2001 |
| EP 2425914 A1 | 07-03-2012 | BR PI1015268 A2 | 03-05-2016 |
| | | CN 102448640 A | 09-05-2012 |
| | | EP 2425914 A1 | 07-03-2012 |
| | | JP 5116722 B2 | 09-01-2013 |
| | | JP 2010253527 A | 11-11-2010 |
| | | KR 20120026511 A | 19-03-2012 |
| | | US 2012109354 A1 | 03-05-2012 |
| | | WO 2010125890 A1 | 04-11-2010 |

EPO FORM P0461

Für nähere Einzelheiten zu diesem Anhang : siehe Amtsblatt des Europäischen Patentamts, Nr.12/82